# EUROPEAN PATENT APPLICATION

(11) **EP 3 865 805 A1**
(43) Date of publication of application: **18.08.2021**
(21) Application number: 20156960.5
(22) Date of filing: 12.02.2020
(51) Int. Cl.: F28D 20/00

(54) **HEAT ACCUMULATOR AND METHOD AND APPARATUS OF FORMING A HEAT ACCUMULATOR**

(71) Applicant: Siemens Gamesa Renewable Energy GmbH & Co. KG, 20097 Hamburg (DE)
(72) Inventor: Pagelsen, Niels, 22303 Hamburg (DE); Eggers, Jan Rudolf, 21640 Bliedersdorf (DE); Ostwald, Alexander, 22083 Hamburg (DE)
(74) Representative: Aspacher, Karl-Georg

(57) **Abstract**

The present invention relates to a heat accumulator (1) comprising a heat exchange chamber (2) having a first opening (3) configured to pass through a working fluid and a second opening (5) configured to pass through a working fluid, and a plurality of heat storage elements (4) filled in the heat exchange chamber (2). At least one cord (6) extends between the heat storage elements (4). The present invention also relates to an apparatus and a method of forming a heat accumulator (1) .

## Description

### Field of invention

The present invention relates to a heat accumulator and to a method and an apparatus of forming a heat accumulator.

A conventional heat accumulator, for example an electrothermal energy storage, comprises a heat exchange chamber being configured to accommodate heat storage elements therein for storing thermal energy. The heat exchange chamber comprises an inlet which is configured to supply a hot working fluid into the heat exchange chamber. The heat exchange chamber also comprises an outlet for the hot working fluid. The hot working fluid can be water, hot or relatively cold steam, air, nitrogen or argon, etc. The hot working fluid is cooled by the heat storage elements by means of heat transfer and then leaves the heat exchange chamber via the outlet.

After the charging is completed, the heat exchange chamber may be left in a standstill period of hours or even days until the stored thermal energy is needed and discharged by feeding a cold working fluid through the outlet. After having flowed through the heat exchange chamber and the heat storage elements, the thus heated working fluid is discharged from the inlet. Alternatively, the cold working fluid can be supplied by a further inlet and discharged by a further outlet.

In the heat accumulator, the heat storage elements are usually loose stones or rocks. The dimensions of the rocks are very small in comparison to the dimensions of the heat exchange chamber. Due to the size of the heat exchange chamber, a huge amount of heat storage elements is necessary. Ideally, the heat exchange chamber has steep and self-supporting walls. As the loose heat storage elements would be moved downwards and towards the outside due to their gravity, they form a pile in the shape of a cone with a certain angle of repose. A solution is necessary to keep the heat storage elements in place. In addition to the formation of a cone due to the gravitational force, the heating of the heat storage elements and the induced expansion leads to an additional tendency to form the aforementioned cone.

In a conventional solution, solid concrete walls having a high thickness were used for the side walls of the heat exchange chamber in order to absorb the forces originating from the heat storage elements. For that sides of the heat exchange chamber, where the inlet and the outlet are arranged, metal grates are conventionally used, which at the same time have to allow the working fluid such as the air to pass into the heat exchange chamber and have to be stable enough to withstand the forces of the heat storage elements.

### Summary of the Invention

There may be a need for an improved heat accumulator and for a method and an apparatus of forming a heat accumulator, which can stabilize the heat storage elements, while the formation of a cone is avoided and metal grates at the inlet and the outlet are not damaged. This need may be met by the subject matters according to the independent claims. The present invention is further developed as set forth in the dependent claims.

According to a first aspect of the invention, a heat accumulator comprises a heat exchange chamber having a first opening configured to pass through a working fluid and a second opening configured to pass through a working fluid. A plurality of heat storage elements is filled in the heat exchange chamber, and at least one cord is arranged to extend between the heat storage elements. In the context of the present invention, the term "cord" can be a stabilization element which is on the one hand sufficiently flexible or elastic to be deformed by the gravity and pressure forces of the deposited heat storage elements. On the other hand, the cord shall substantially maintain its length to hold the heat storage elements together. The cord can be a rope, a strap, a strip, a wire, a cable, a line, a twisted structure, a meshed structure, or a composition thereof. The cross section of the rope can be circular, elliptic or rectangular.

Instead of merely using loose heat storage elements and absorbing the total gravity induced forces of the heat storage elements solely by means of solid walls and grates, the principle of the present invention is to reinforce the loose heat storage elements by the cord, such as a flexible wire or rope, or by pieces of flexible wires or ropes, which results in an essentially self-supporting structure of the heat storage elements and would therefore reduce the forces induced by the heat storage elements and acting on walls and grates of the heat exchange chamber.

The cord basically entangles the heat storage elements in an arbitrary or predetermined pattern and holds the heat storage elements together. The cord is flexible and able to freely adapt its shape according to the deposited heat storage elements. The cord is usually tensioned by the gravity induced forces of the heat storage elements. As the cord does substantially not change its length, the heat storage elements are held together by the tensioned cord. At the same time, the cord is held in place as the cord is sandwiched between the deposited heat storage elements.

In an embodiment, the cord is a rope made of ceramic fibres, a rope made of metal wires, a metal cable, or a combination thereof. As the temperature inside the heat exchange chamber can reach more than 700°C, the reinforcement material has to withstand this temperature region without failure. For example, steel and ceramic fibres would allow operating temperatures of more than 1000°C.

In an embodiment, the cord forms a meshed structure, a loop, a spiral, a ring, a serpentine or a combination thereof. One option is to use an "endless" cord which is continuously woven into the heat storage elements, for example as one or more loops, during the filling process. A second option is to place the cord in the shape of discrete wire rings into the heat storage elements in certain intervals during the filling process. A third option would be a mesh such as a net to be integrated into the heat storage elements. In an embodiment, the heat exchange chamber comprises a plurality of cords which are shaped as an open or closed structure.

In an embodiment, the heat exchange chamber comprises a first part and a second part, wherein the first and second parts are filled by the heat storage elements, and the cord is arranged in the first part but not in the second part. The second part includes at least 10% of the plurality of heat storage elements. Alternatively or in addition, a density of the cord in the first part can be higher than that in the second part, wherein the second part likewise includes at least 10% of the plurality of heat storage elements. In an alternative embodiment, the first part of the heat exchange chamber is arranged at an outer side of the heat exchange chamber and the second part of the heat exchange chamber is arranged at an inner side of the heat exchange chamber, that means the outer side surrounds the inner side.

It is thus possible to reinforce not only the entire volume of the heat exchange chamber but also only a part of the volume of the heat exchange chamber. As an example for the latter option, if only the outer part of the heat exchange chamber is reinforced, this reinforced part could essentially act as a supporting wall for the remaining inner, non-reinforced part of the heat exchange chamber and absorb the forces originating from the loose heat storage elements acting towards the outside.

In an embodiment, the heat accumulator is either configured to be horizontally operated, wherein a working fluid flow between the first and second openings is substantially horizontal, or the heat accumulator is configured to be vertically operated, wherein a working fluid flow between the first and second openings is substantially vertical. In both cases, the walls of the heat exchange chamber can be made less robust compared with the prior art as the loads induced by the heat storage elements and acting on the heat exchange chamber are reduced by the present invention. Also the grates can be made less robust compared with the prior art, in particular where the grates are vertically arranged.

According to a second aspect of the invention, a method of forming a heat accumulator is provided, wherein the method comprises: providing a heat exchange chamber; filling a plurality of heat storage elements into the heat exchange chamber; and arranging at least one cord within the heat exchange chamber such that the cord extends between the heat storage elements.

In an embodiment of the method, the steps of filling the heat storage elements and arranging the cord are carried out at the same time so that the method is fast.

In an embodiment of the method, the method comprises the following steps: filling a first layer of heat storage elements into the heat exchange chamber; arranging a first portion of the cord onto the first layer of heat storage elements; and filling a second layer of heat storage elements into the heat exchange chamber onto the first layer of heat storage elements and the first portion of the cord. Thereby, a sandwich structure is obtained which can have a regular and stable pattern of the cord between adjacent layers of heat storage elements.

In an embodiment of the method, the cord is shaped as a meshed structure, a loop, a spiral, a ring, a serpentine or a combination thereof. In an embodiment of the method, a plurality of cords is arranged, wherein each cord is shaped as a closed structure. By these patterns, a predetermined stability of the heat storage elements can be achieved.

According to a third aspect of the invention, an apparatus for filling a heat exchange chamber is provided, wherein the apparatus comprises: a cord dispenser dispensing a cord; a heat storage element dispenser dispensing heat storage elements; and a moving device which is configured to move the cord dispenser and the heat storage element dispenser above a working plane. The apparatus is configured to dispense the at least one cord and the heat storage elements into the heat exchange chamber so that the at least one cord extends between the heat storage elements.

In summary, by providing an essentially self-supporting structure of the heat storage elements and the cords, the forces acting on the walls and grates of the heat exchange chamber are remarkably reduced. Due to the present invention, the grates could be designed for much lower forces acting thereon, which result in lower dimensions and a remarkably cost saving potential.

It is even possible that the grates can completely be omitted if the self-supporting heat storage elements proves to be stable enough to prevent any material to fall into the inlet or outlet. Even in heat exchange chamber which do not require such grates due to their geometry, the present invention is advantageous since the forces acting on the heat exchange chamber walls are reduced.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
- Fig. 1: shows a schematic longitudinal section of a heat accumulator according to an embodiment; and
- Fig. 2: shows an arrangement of heat storage elements and cords according to an embodiment.

### Detailed Description

The illustrations in the drawings are schematically. It is noted that in different figures, similar or identical elements are provided with the same reference signs.

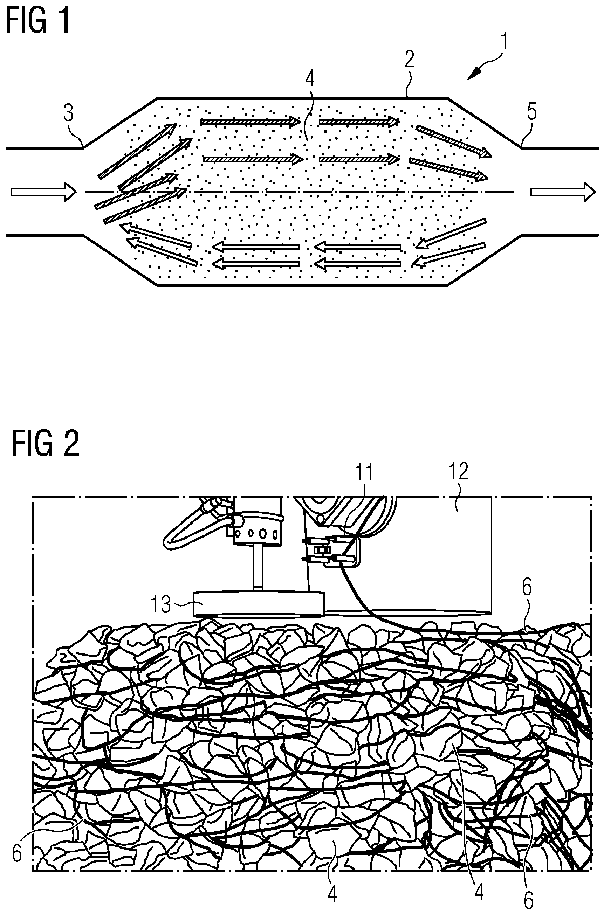

**Fig. 1** shows a schematic longitudinal section of a heat accumulator 1 according to an embodiment. The heat accumulator 1 comprises a heat exchange chamber 2 which is defined by a wall or a plurality of walls. The heat exchange chamber 2 has a first opening 3 configured to pass through a working fluid and a second opening 5 configured to pass through a working fluid. The heat accumulator 1 is horizontally operated in the intended use because a working fluid flow between the first and second openings 3, 5 is substantially horizontal. The present invention is also applicable to a heat accumulator 1 which is configured to be vertically operated, wherein a working fluid flow between the first and second openings 3, 5 is substantially vertical.

A plurality of heat storage elements 4 for storing thermal energy is filled in the heat exchange chamber 2. The heat storage elements 4 are provided as bulk material and have a relatively high thermal storage capacity. Preferably, a material of the heat storage elements 4 comprises sand and/or stones. The heat exchange chamber 2 may comprise multiple different heat storage elements 4. The stones can be natural stones or artificial stones. Mixtures thereof are possible, too. Artificial stones can consist of containers which are filled with heat storage material. Preferably, the stones comprise gravels (pebbles), rubbles and/or grit (splits). The artificial material comprises preferably clinkers, ceramics, steel or steel slack pellets. The stones may in particular be selected from the group of bricks, volcanic rocks, granites, basalts or ceramics provided as bulk material, for example. This can also be called pebble bed. However, the present invention is not limited to these examples.

The first opening 3 serves as an inlet (which can also be a combined in- and outlet) configured to supply the hot working fluid into the heat exchange chamber 2. The working fluid can be water, hot or relatively cold steam, air, nitrogen or argon, etc. The thus cooled working fluid leaves the heat exchange chamber 2 via the second opening 5 which serves as an outlet (or a combined in- and outlet). The flow of the hot working fluid is indicated by arrows from the left side to the right side in Fig. 1.

After the charging is completed, the heat exchange chamber 2 may be left in a standstill period of hours or even days until the stored thermal energy is needed and discharged by feeding another, cold working fluid to the second opening 5 (which is then used as an inlet for the cold working fluid).

After having flowed through the heat exchange chamber 2 and the heat storage elements 4, the thus heated working fluid is ejected from the first opening 3 (which is then used as an outlet for the cold working fluid). The flow of the cold working fluid is indicated by arrows from the right side to the left side in Fig. 1.

**Fig. 2** shows an arrangement of heat storage elements 4 and cords 6 according to an embodiment. That is, the heat accumulator 1 comprises a plurality of heat storage elements 4 filled in the heat exchange chamber 2, and at least one flexible cord 6 extending between the heat storage elements 4. The cord 6 basically entangles the heat storage elements 4 in an arbitrary or predetermined pattern and holds the heat storage elements 4 together. The cord 6 is flexible and able to freely adapt its shape according to the deposited heat storage elements 4. The cord 6 is usually tensioned by the gravity induced forces of the heat storage elements 4. As the cord 6 does substantially not change its length, the heat storage elements 4 are held together by the tensioned cord 6. At the same time, the cord 6 is held in place as the cord 6 is sandwiched between the deposited heat storage elements 4.

As the temperature inside the heat exchange chamber 2 can reach more than 700°C, the material of the cord 6 has to withstand this temperature region without failure. Preferably, material of the cord 6 is heat resistant up to 300°C, more preferred up to 700°C and most preferred up to 1000°C. For example, the cord 6 can be a rope made of ceramic fibres, a rope made of metal wires, a metal cable or a combination thereof. The cord 6 can have a twisted structure.

Concerning the geometrical structure of the cord 6, the cord 6 can form a meshed structure like a net, a loop, a spiral, a ring, a serpentine or a combination thereof. The meshed structure, the loop, the spiral, the ring or the serpentine can be formed two-dimensionally, that is the cord 6 has a planar extension. As a matter of course, the loop, the spiral, the ring or the serpentine can also be formed three-dimensionally, that is the loop, the spiral, the ring or the serpentine can be recognized in a plan view such as in an XY-plane of a cartesian coordinate system, while the cord 6 has also some extension in an Z-axis of the cartesian coordinate system. The heat exchange chamber 2 can comprise a plurality of cords 6 which are shaped as a closed structure, in particular a closed loop or a closed ring.

The heat exchange chamber 2 can comprise a first part and a second part, wherein the first and second parts are filled by the heat storage elements 4. The cord 6 is arranged in the first part but not in the second part. The second part includes at least 10%, preferably at least 30% and most preferred at least 50% of the plurality of heat storage elements 4.

Alternatively, a density of the cord 6 in the first part can be higher than that in the second part, wherein the second part includes at least 10%, preferably at least 30% and most preferred at least 50% of the plurality of heat storage elements 4. The density of the cord 6 can be defined to be a volume or mass of the material of the cord 6 per volume unit.

Preferably, the first part of the heat exchange chamber 2 is arranged at an outer side of the heat exchange chamber 2 and the second part of the heat exchange chamber 2 is arranged at an inner side of the heat exchange chamber 2, that is the outer side surrounds and supports the inner side.

Fig. 2 also shows parts of an apparatus for forming the heat accumulator 1. The apparatus comprises a cord dispenser 11 dispensing the cord 6; a heat storage element dispenser 12 dispensing the heat storage elements 4. The apparatus further comprises a moving device (not shown) such as a portal robot, an industrial robot or the like, which is configured to move the cord dispenser 11 and the heat storage element dispenser 12 above horizontal a working plane. Reference sign 13 designates a plate or a ram which is vertically moved up and down to compact the heat storage elements 4.

A method of forming the heat accumulator 1 can comprise the following steps: First, a heat exchange chamber 2 is provided, which is then filled by a plurality of heat storage elements 4. At least one flexible cord 6 is arranged within the heat exchange chamber 2 such that the cord 6 extends between the heat storage elements 4.

In an embodiment, the steps of filling the heat storage elements 4 and arranging the cord 6 are carried out at the same time. The cord 6 can arbitrarily arranged within the heat storage elements 4 or in a certain pattern such as a loop, a spiral, a ring, a serpentine or a combination thereof.

In another embodiment, a first layer of heat storage elements 4 is filled into the heat exchange chamber 2, and a first portion of the cord 6 is arranged or deposited onto the first layer of heat storage elements 4. Thereafter, a second layer of heat storage elements 4 is filled into the heat exchange chamber 2 onto the first layer of heat storage elements 4 and the first portion of the cord 6. These steps can be repeated so that a sandwich structure is obtained. The cord 6 can arbitrarily arranged within the heat storage elements 4 or in a certain pattern such as a meshed structure, a loop, a spiral, a ring, a serpentine or a combination thereof.

In an embodiment, a plurality of cords 6 is arranged, wherein each cord 6 is shaped as an open or closed structure, in particular a closed loop or a closed ring.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. A heat accumulator (1) comprising:
a heat exchange chamber (2) having a first opening (3) configured to pass through a working fluid and a second opening (5) configured to pass through a working fluid;
a plurality of heat storage elements (4) filled in the heat exchange chamber (2); and
at least one cord (6) extending between the heat storage elements (4).

2. The heat accumulator (1) according to the preceding claim, wherein
the cord (6) is a rope made of ceramic fibres, a rope made of metal wires, a metal cable or a combination thereof.

3. The heat accumulator (1) according to any one of the preceding claims, wherein
the cord (6) forms a twisted structure, a meshed structure, a loop, a spiral, a ring, a serpentine or a combination thereof.

4. The heat accumulator (1) according to any one of the preceding claims, wherein
the heat exchange chamber (2) comprises a plurality of cords (6) which are shaped as an open or closed structure.

5. The heat accumulator (1) according to any one of the preceding claims, wherein
the heat exchange chamber (2) comprises a first part and a second part, wherein the first and second parts are filled by the heat storage elements (4); and
the cord (6) is arranged in the first part but not in the second part, wherein the second part includes at least 10% of the plurality of heat storage elements (4).

6. The heat accumulator (1) according to any one of the preceding claims, wherein
the heat exchange chamber (2) comprises a first part and a second part, wherein the first and second parts are filled by the heat storage elements (4); and
a density of the cord (6) in the first part is higher than that in the second part, wherein the second part includes at least 10% of the plurality of heat storage elements (4) .

7. The heat accumulator (1) according to any one of the preceding claims 5 and 6, wherein
the first part of the heat exchange chamber (2) is arranged at an outer side of the heat exchange chamber (2) and the second part of the heat exchange chamber (2) is arranged at an inner side of the heat exchange chamber (2).

8. The heat accumulator (1) according to any one of the preceding claims, wherein
the heat accumulator (1) is either configured to be horizontally operated to enable a working fluid flow between the first and second openings (3, 5) substantially in a horizontal direction, or the heat accumulator (1) is configured to be vertically operated to enable a working fluid flow between the first and second openings (3, 5) substantially in a vertical direction.

9. A method of forming a heat accumulator (1), the method comprising:
providing a heat exchange chamber (2);
filling a plurality of heat storage elements (4) into the heat exchange chamber (2); and
arranging at least one cord (6) within the heat exchange chamber (2) such that the cord (6) extends between the heat storage elements (4).

10. The method according to the preceding claim, wherein
the steps of filling the heat storage elements (4) and arranging the cord (6) are carried out at the same time.

11. The method according to any one of claims 9 and 10, comprising the following steps:
filling a first layer of heat storage elements (4) into the heat exchange chamber (2);
arranging a first portion of the cord (6) onto the first layer of heat storage elements (4); and
filling a second layer of heat storage elements (4) into the heat exchange chamber (2) onto the first layer of heat storage elements (4) and the first portion of the cord (6).

12. The method according to any one of claims 9 to 11, wherein
the cord (6) is shaped as a twisted structure, a meshed structure, a loop, a spiral, a ring or a serpentine.

13. The method according to any one of claims 9 to 12, wherein
a plurality of cords (6) is arranged, wherein each cord (6) is shaped as an open or closed structure.

14. An apparatus for filling a heat exchange chamber (2), wherein the apparatus comprises:
a cord dispenser (11) dispensing a cord (6);
a heat storage element dispenser (12) dispensing heat storage elements (4); and
a moving device which is configured to move the cord dispenser (11) and the heat storage element dispenser (12) above a working plane.
